Europäisches Patentamt

European Patent Office

Office européen des brevets

(19)

(11) Numéro de publication: **0 013 527**
**A1**

## (12) DEMANDE DE BREVET EUROPEEN

(21) Numéro de dépôt: **79401069.4**

(22) Date de dépôt: **26.12.79**

(51) Int. Cl.³: **B 62 J 1/26**
**B 68 C 1/08**

(30) Priorité: **27.12.78 FR 7837077**

(43) Date de publication de la demande:
**23.07.80 Bulletin 80/15**

(84) Etats Contractants Désignés:
**AT BE CH DE GB IT LU NL SE**

(71) Demandeur: **Alvarez-Matorra, André**
**Rue du Foirail**
**F-40230 St. Vincent de Tyrosse(FR)**

(72) Inventeur: **Alvarez-Matorra, André**
**Rue du Foirail**
**F-40230 St. Vincent de Tyrosse(FR)**

(74) Mandataire: **Trolliet, Jean-Claude**
**Cabinet BURDIPAT 98, cours de Verdun**
**F-33000 Bordeaux(FR)**

(54) **Dispositif d'assise propre à améliorer le confort d'un usager sur une selle, et support, en particulier selle, le comportant.**

(57) Le dispositif d'assise 10 suivant l'invention mis eu oeuvre à cet effet comporte deux alvéoles 16A, 16B, qui sont destinées à se trouver à l'aplomb des os ischions de l'usager, et qui, fermées de manière étanche pour confinement d'un fluide de gonflage, sont en communication l'une avec l'autre.

FIG.1

EP 0 013 527 A1

1
## Dispositif d'assise propre à améliorer le confort d'un usager
## sur une selle, et support, en particulier selle, le comportant

La présente invention concerne d'une manière générale le confort de toute personne appelée à faire usage d'une selle, qu'il s'agisse d'un cycliste ou motocycliste par exemple, ou qu'il s'agisse d'un cavalier.

Lors de l'utilisation normale d'une selle sur laquelle s'assoit l'usager, la simple position assise, le mouvement des jambes, qui est alternatif pour le cycliste et simultané pour le cavalier, et les éventuels cahots, ne manquent pas d'être fréquemment à l'origine de douleurs et de machures locales et parfois même de blessures et de furoncles.

Ces inconvénients sont sensibles au niveau des muscles fessiers, et plus particulièrement à l'aplomb des os ischions.

Ils sont dus, d'une part au poids du corps reposant sur la selle, d'autre part au frottement sur la selle occasionné par le mouvement alternatif, ou simultané, des jambes.

La présente invention a d'une manière générale pour objet d'atténuer, voire même éliminer, ces inconvénients.

De manière plus précise, elle a tout d'abord pour objet un dispositif d'assise propre à améliorer le confort d'un usager sur une selle ; elle a encore pour objet un quelconque support, et en particulier une quelconque

2

selle équipée d'un tel dispositif d'assise.

Le dispositif d'assise suivant l'invention est d'une manière générale caractérisé en ce qu'il comporte deux alvéoles, destinées à se trouver à l'aplomb des os ischions de l'usager, de préférence en les débordant, et en ce que lesdites alvéoles, qui sont fermées de manière étanche, sont en communication l'une avec l'autre.

En pratique, ces alvéoles sont par exemple séparées l'une de l'autre par une bande médiane morte allongée, qu'elles bordent longitudinalement chacune de leur côté, et elles sont en communication l'une avec l'autre à l'une et/ou à l'autre des extrémités avant arrière de ladite bande médiane morte.

Comme l'expérience le prouve, cette bande médiane morte s'avère nécessaire au confort de l'usager en ce qu'elle évite que le sillon interfessier de ce dernier ne soit désagréablement comblé, dans ses endroits les plus intimes, par le gonflement accentué qui résulterait d'une alvéole gonflée placée sous lui. L'accentuation de ce gonflage localisé provenant alors de la pression exercée par les ischions et muscles fessiers.

De plus la bande médiane morte a un effet stabilisateur en ce qu'elle évite que l'usager ne soit alternativement déporté d'un côté à l'autre comme il l'est, à l'expérience, dans le cas d'une formule monoalvéolaire axiale.

Par exemple, suivant une forme préférée de réalisation, et s'agissant plus particulièrement d'un dispositif d'assise destiné à un cycliste ou à un motocycliste, chacune des alvéoles se prolonge vers l'avant par un canal de moindre section, parallèlement à la bande médiane morte, et, à l'extrémité correspondante de celle-ci, les canaux prolongeant ainsi les alvéoles se rejoignent, à l'aplomb des organes génitaux de l'usager assis et, avantageusement, ils forment conjointement, au-dessus du bec de selle correspondant, un renflement.

3

En pratique, le dispositif d'assise suivant l'invention comporte en outre un embout de gonflage, qui communique avec l'une et/ou l'autre de ses alvéoles, et qui est ainsi propre à l'introduction dans celles-ci d'un quelconque fluide de gonflage,liquide, pâteux ou gazeux par exemple.

Certes, pour améliorer le confort d'un usager assis sur une selle, il a déjà été proposé d'équiper celle-ci d'un rembourrage.

Mais il s'agit à ce jour d'un rembourrage statique.

Il n'en est pas de même dans le dispositif d'assise suivant l'invention, dans lequel, par le gonflage des alvéoles qu'il comporte, d'une part, et par la communication prévue entre ses alvéoles, d'autre part, il est au contraire assuré un rembourrage hydrodynamique.

En effet, dans le dispositif d'assise suivant l'invention et s'agissant plus particulièrement de son application à un cycliste ou motocycliste par exemple, le fluide de gonflage mis en œuvre est alternativement transféré d'une alvéole à l'autre, selon la pression, elle-même alternative à raison du pédalage, dont ces alvéoles sont l'objet de la part de l'usager.

Autrement dit, lorsque la pression sur une alvéole augmente, il y a en quelque sorte une fuite du fluide de gonflage présent dans celle-ci, en direction de l'autre alvéole, sur laquelle la pression se trouve momentanément en réduction, et de cette fuite il résulte d'une part une meilleure adaptation instantanée du dispositif à la pression réellement exercée sur celui-ci, et d'autre part une réduction des frottements sur ce dispositif et donc une réduction de la douleur conséquente.

Les caractéristiques et avantages de l'invention ressortirontd'ailleurs de la description qui va suivre, à titre d'exemple, en référence aux dessins schématiques annexés sur lesquels :

- la figure 1 est une vue en perspective

4

d'un dispositif d'assise suivant l'invention,

- les figures 2, 3, 4 en sont des vues en coupe transversale suivant respectivement les lignes II-II III-III et IV-IV de la figure 1,

- la figure 5 en est une vue en plan, suivant la flèche V de la figure 1, avec un arrachement local,

- la figure 6 reprend globalement la figure 2 et illustre la mise en place sur une selle du dispositif d'assise suivant l'invention,

- la figure 7 est une vue analogue à celle de la figure 6, pour une variante de mise en place,

- les figures 8, 9, 10 sont également des vues globalement analogues à celle de la figure 2 et illustrent, chacune respectivement, l'incorporation à une selle d'un dispositif d'assise suivant l'invention.

Ces figures se rapportent plus particulièrement, à titre d'exemple, à l'équipement d'une selle de bicyclette.

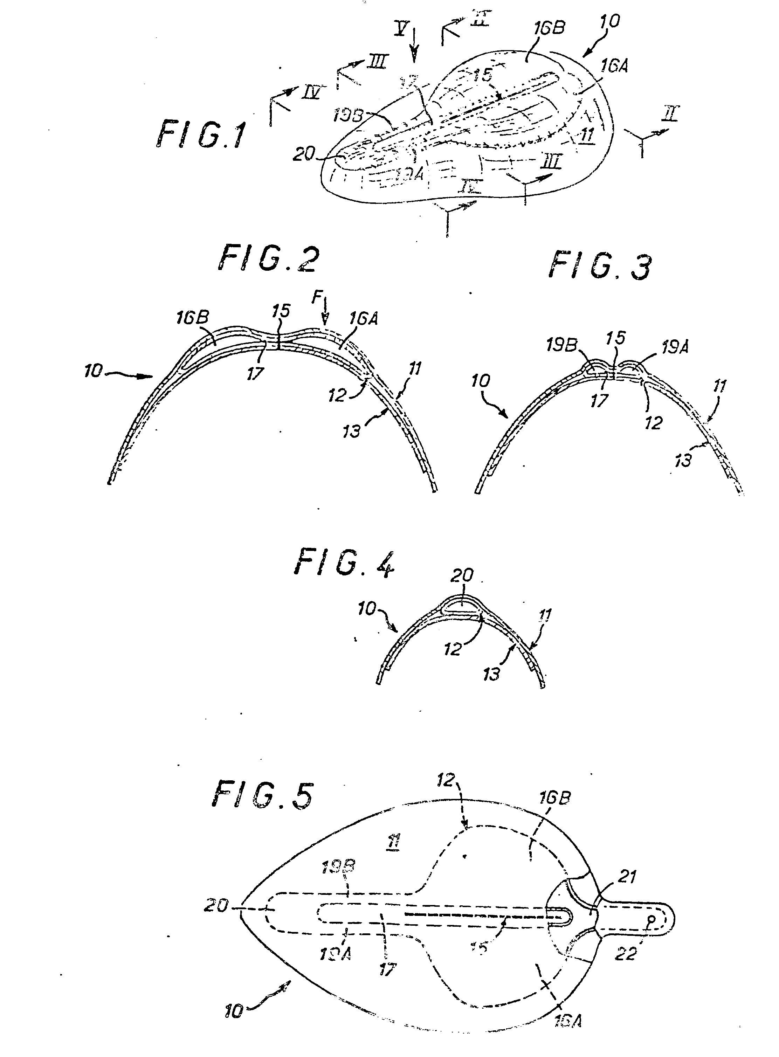

Dans la forme de réalisation représentée sur les figures 1 à 5, le dispositif d'assise 10 prévu à cet effet suivant l'invention comporte trois feuillets superposés, à savoir un feuillet supérieur de couverture 11, un feuillet médian de confort 12, qui sera décrit plus en détail ci-après, et un feuillet inférieur de base 13.

Le feuillet supérieur 11 et le feuillet inférieur 13 débordent latéralement trés largement du feuillet médian 12, et le feuillet supérieur 11 déborde lui-même latéralement du feuillet inférieur 13.

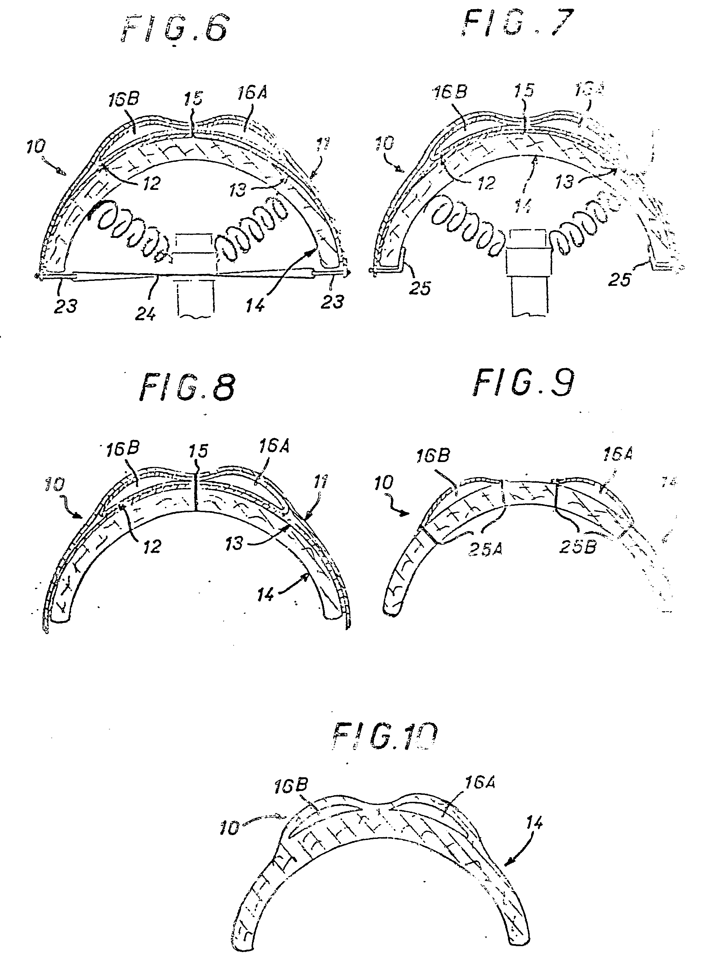

De préférence, et tel que représenté, ce feuillet inférieur de base 13 épouse la forme de la selle 14, figure 6, à laquelle il doit être appliqué, et il est par exemple réalisé en toute matière souple ou dure appropriée, telle que cuir, caoutchouc, ou matière synthétique dite plastique.

Quoiqu'il en soit, les feuillets 11, 12, 13 ne sont liés entre eux que par une ligne médiane de solidarisation commune 15, réalisée par exemple

5

par couture, piquage, agrafage ou collage, et matérialisée en traits interrompus appuyés à la figure 1 et à la figure 5.

Les feuilles 11, 12, 13 sont par ailleurs libres de jouer l'un par rapport à l'autre de part et d'autre de cette ligne de solidarisation commune 15, et, pour faciliter un tel jeu, il est de préférence prévu, entre deux successifs quelconques de ces feuillets, un produit de lubrification tel que talc, ou produit huileux ou graisseux par exemple.

D'une manière générale, le dispositif d'assise 10 suivant l'invention comporte deux alvéoles 16A, 16B, qui sont destinées à se trouver chacune respectivement à l'aplomb des os ischions de l'usager et qui, dans l'exemple de réalisation représenté, sont formées dans son feuillet médian 12 ; à cet effet, celui-ci est à double paroi.

Ces alvéoles 16A, 16B sont fermées de manière étanche, et sont en communication l'une avec l'autre, ainsi qu'il apparaîtra ci-aprés.

Dans l'exemple de réalisation représenté, les alvéoles 16A, 16B sont séparées l'une de l'autre par une bande médiane morte allongée 17, qu'elles bordent longitudinalement chacune de leur côté, et dont la ligne de solidarisation 15 précédemment décrite forme l'axe médian ; cette bande médiane morte est par exemple formée par soudure ou collage local des deux parois constitutives du feuillet médian 12.

En pratique, dans l'exemple de réalisation représenté, les alvéoles 16A, 16B sont en communication l'une avec l'autre aussi bien à l'extrémité avant de la bande médiane morte 17, qu'à l'extrémité arrière de celle-ci.

En effet, chacune des alvéoles 16A, 16B se prolonge vers l'avant par un canal de moindre section 19A, 19B, et en pratique de section relativement étroite, parallèlement à la bande médiane morte 17 et à l'extrémité avant correspondante de celle-ci, les canaux 19A, 19B prolongeant ainsi les

6

alvéoles 16A, 16B se rejoignent et forment conjointement un renflement d'extrémité 20 destiné à se placer à l'aplomb des organes génitaux de l'usager.

Conjointement, les alvéoles 16A, 16B se rejoignent en 21 à l'arrière de la bande médiane morte 17, figure 5, et, en liaison avec la zone ainsi commune à ces deux alvéoles, le dispositif d'assise 10 suivant l'invention comporte un organe de fermeture 22 propre à assurer l'étanchéité de ces alvéoles.

Il peur s'agir d'une simple valve anti-retour, ayant autorisé en atelier l'introduction d'un quelconque fluide de gonflage, liquide, pâteux ou gazeux, dans les alvéoles 16A, 16B, et s'opposant ensuite de manière étanche et définitive à tout reflux vers l'extérieur de ce fluide de gonflage.

Mais il peut également s'agir d'un embout de gonflage du type de ceux équipant usuellement les chambres à air de bicyclette ou les ballons, et autorisant l'usager à moduler à son gré la pression de gonflage correspondante, par introduction ou retrait de fluide de gonflage.

Quoi qu'il en soit, lorsque, par exemple, une pression est exercée localement sur l'alvéole 16A, tel que schématisé par la flèche F de la figure 2, une partie au moins du fluide de gonflage présent dans cette alvéole reflue de celle-ci vers l'alvéole 16B qui lui est associée, par l'une et/ou l'autre des communications prévues entre ces alvéoles aux extrémités de la bande médiane morte 17.

De préférence, le dispositif d'assise 10 suivant l'invention ainsi constitué est équipé de moyens d'arrimage propres à en faciliter la fixation à la selle 14 qu'il doit équiper.

Par exemple, et tel que représenté à la figure 6, le feuillet supérieur de couverture 11 de ce dispositif est dote, le long de ses bords latéraux, d'œillets 23, qu'un jeu de lacets ou de liens élastiques 24 reli... deux à

7

deux, d'un desdits bords latéraux à l'autre, en dessous de la selle 14.

En variante, il s'agit de crochets 25 propres à être engagés sur les bords latéraux de la selle 14, figure 7.

D'autres moyens d'arrimage peuvent être d'ailleurs prévus, et par exemple des moyens adhésifs, ou encore des moyens d'adhérence par crochetage ou imbriquation mutuelle du type de ceux commercialisés sous la désignation "VELCRO".

De tels moyens peuvent par exemple prolonger les bords latéraux du feuillet de couverture supérieur, pour être rabattus sur la face interne de la selle 14, équipée en conséquence ; ils peuvent aussi être prévus entre la face supérieure de cette selle, également équipée alors en conséquence, et le feuillet inférieur de base du dispositif d'assise 10 concerné.

Quoi qu'il en soit, ce dispositif d'assise est de préférence mis en place à l'état dégonflé sur la selle 14 qu'il doit équiper, et ce n'est qu'après que les moyens d'arrimage prévus entre lui et cette selle aient été mis en œuvre qu'il est gonflé.

En effet, dans ce cas, le gonflement du dispositif d'assise suivant l'invention confirme alors avantageusement l'arrimage préalable de celui-ci sur la selle concernée, en le contraignant à épouser parfaitement et intimement celle-ci, quels que soient les moyens d'arrimage correspondants.

Dans ce qui précède, le dispositif d'assise suivant l'invention forme un produit distinct de la selle qu'il doit équiper.

Mais, suivant un développement de l'invention, il peut au contraire être incorporé à cette selle, tel que l'illustrent à titre d'exemple les figures 8 à 10.

8

A la figure 8, il est simplement fixé à la selle 14, par la ligne de solidarisation 15 déjà commune aux feuillets qui le constituent.

Suivant la variante de la figure 9, chacune de ses alvéoles 16A, 16B sont individuellement rapportées sur la selle 14, à la surface supérieure de celle-ci, par exemple par agrafage, couture, collage ou soudure, tel que schématisé en 25A, 25B.

Enfin, suivant la variante représentée à la figure 10, les alvéoles 16A, 16B, sont formées au sein même de l'épaisseur de la selle 14.

D'ailleurs, le dispositif d'assise suivant l'invention peut être intégré à tout autre support qu'une selle, et par exemple à une culotte, en étant glissé entre les deux parois d'un double fond prévu à cet effet dans une telle culotte.

La présente invention ne se limite donc pas aux formes de réalisation et de mise en œuvre décrites et représentées, mais englobe toute variante d'exécution et de mise en œuvre, aussi bien que toute variante d'application.

0013527

1°) Dispositif d'assise propre à améliorer le confort d'un usager sur une selle, caractérisé en ce qu'il comporte deux alvéoles destinées à se trouver à l'aplomb des os ischions dudit usager, et en ce que lesdites alvéoles, qui sont fermées de manière étanche, sont en communication l'une avec l'autre.

2°) Dispositif d'assise suivant la revendication 1, caractérisé en ce que lesdites alvéoles sont séparées l'une de l'autre par une bande médiane morte allongée, qu'elles bordent longitudinalement chacune de leur côté, et elles sont en communication l'une avec l'autre à l'une et/ou l'autre des extrémités avant arrière de ladite bande médiane morte.

3°) Dispositif d'assise suivant la revendication 2, caractérisé en ce que, chacune des alvéoles se prolonge vers l'avant par un canal de moindre section, parallèlement à la bande médiane morte, et en ce que, à l'extrémité correspondante de celle-ci, les canaux prolongeant ainsi les alvéoles se rejoignent et, de préférence, ils forment conjointement un renflement.

4°) Dispositif d'assise suivant l'une quelconque des revendications 1 à 3, caractérisé en ce qu'il comporte un embout de gonflage, qui communique avec l'une et/ou l'autre de ses alvéoles, et qui est ainsi propre à l'introduction d'un quelconque fluide de gonflage, liquide ou gazeux, dans celle-ci.

5°) Dispositif d'assise suivant l'une quelconque des revendications 1 à 4, caractérisé en ce qu'il comporte au moins deux feuillets superposés, à savoir, un feuillet supérieur de couverture et un feuillet médian de confort dans lequel sont formées ses alvéoles.

6°) Dispositif d'assise suivant la revendication 5, caractérisé en ce qu'il comporte encore un feuillet inférieur de base.

7°) Dispositif d'assise suivant l'une quelconque des revendications 5 et 6,

caractérisé en ce que les feuillets qui le constituent ne sont liés entre eux que par une ligne médiane de solidarisation commune, lesdits feuillets étant par ailleurs libres de jouer l'un par rapport à l'autre de part et d'autre de cette ligne de solidarisation.

8°) Dispositif d'assise suivant l'une quelconque des revendications 5 à 7, caractérisé en ce que, entre deux successifs des feuillets qui le constituent, est prévu un produit de lubrification, tel que talc par exemple.

9°) Dispositif d'assise suivant l'une quelconque des revendications 5 à 8, caractérisé en ce que son feuillet supérieur de couverture est équipé, par exemple le long de ses bords latéraux, de moyens d'arrimage, tels que œillets ou crochets par exemple, propres à en faciliter la fixation à une selle.

10°) Dispositif d'assise suivant l'une quelconque des revendications 1 à 8, caractérisé en ce qu'il est incorporé à un support, tel que selle ou culotte par exemple.

11°) Support, en particulier selle, et notamment selle de bicyclette, caractérisé en ce qu'il comporte un dispositif d'assise conforme à l'une quelconque des revendications 1 à 10.

0013527

**FIG.1**

**FIG.2**　　　　**FIG.3**

**FIG.4**

**FIG.5**

FIG.6

16B  15  16A
10
12  13  11
23  24  14  23

FIG.7

16B  15  16A
10
12  14  13
25  25

FIG.8

16B  15  16A
10
12  13  11
14

FIG.9

16B  16A
10
25A  25B

FIG.10

16B  16A
10  14

Office européen
des brevets

**RAPPORT DE RECHERCHE EUROPEENNE**

0013527

Numero de la demande

EP 79 40 1069

| Catégorie | Citation du document avec indication, en cas de besoin, des parties pertinentes | Revendication concernée |
|---|---|---|
| | CH - A - 130 056 (GROSSENBACHER)<br>* Figures 1-5; page 1, colonne de gauche, colonne de droite, lignes 1-23 * | 1-6 |
| | -- | |
| | CH - A - 122 720 (SAUTTER)<br>* Figures 1-3; pages 1,2 * | 1-4 |
| | -- | |
| | BE - A - 418 810 (KAZANOVITCH)<br>* Figures 1,2; page 2, lignes 16-23; page 3, lignes 1-27 * | 1,2,4 |
| | -- | |
| | CH - A - 86 120 (I.S.A.)<br>* Figures 1,2; page 1, colonne de gauche, colonne de droite, lignes 1-15 * | 1,2 |
| | -- | |
| | CH - A - 138 747 (BIVORT)<br>* Figures 1-3; page 1,2, colonne de gauche, lignes 1-24 * | 1,2 |
| | ---- | |

**DOCUMENTS CONSIDERES COMME PERTINENTS**

**CLASSEMENT DE LA DEMANDE (Int. Cl.³)**

B 25 J 1/24
B 68 C 1/08

**DOMAINES TECHNIQUES RECHERCHES (Int. Cl.³)**

B 62 J
B 68 C

**CATEGORIE DES DOCUMENTS CITES**

X: particulièrement pertinent
A: arrière-plan technologique
O: divulgation non-écrite
P: document intercalaire
T: theorie ou principe a la base de l'invention
E: demande faisant interference
D document cite dans la demande
L document cite pour d'autres raisons

&: membre de la même famille, document correspondant

Le present rapport de recherche a ete etabli pour toutes les revendications

| Lieu de la recherche | Date d'achevement de la recherche | Examinateur |
|---|---|---|
| La Haye | 31-03-1980 | VANNESTE |